# EUROPEAN PATENT APPLICATION

(11) **EP 3 200 504 A1**
(43) Date of publication of application: **02.08.2017**
(21) Application number: 15757756.0
(22) Date of filing: 16.01.2015
(51) Int. Cl.: H04W 28/08

(54) **AUTOMATIC LOAD REALLOCATION METHOD, DEVICE AND SYSTEM AND STORAGE MEDIUM**

(30) Priority: 25.09.2014 CN 201410497731
(71) Applicant: ZTE Corporation, Shenzhen, Guangdong 518057 (CN)
(72) Inventor: TIAN, Jie, Shenzhen Guangdong 518057 (CN); WU, Mingzhu, Shenzhen Guangdong 518057 (CN)
(74) Representative: Winter, Brandl, Fürniss, Hübner, Röss, Kaiser, Polte - Partnerschaft mbB
(86) International application number: PCT/CN2015/070910
(87) International publication number: WO 2015/131674

(57) **Abstract**

Disclosed is an automatic load reallocation method, including: allocating, when an MSC in an MSC Pool to which a UE applies for access detects that the UE moves from outside of the MSC Pool to inside of the MSC Pool, an TMSI containing an NULL NRI, and a non-broadcast location area to the UE, and sending the TMSI containing the NULL NRI, and the non-broadcast location area to the UE; sending, by the UE, a location update request of the TMSI containing the NULL NRI to an NNSF entity when determining that the received non-broadcast location area is inconsistent with a current location area; and reselecting, by the NNSF entity, a new MSC for the UE according to load sharing proportion when determining that the NRI in the location update request message is the NULL NRI. Another automatic load reallocation method, device and system, and storage medium are further disclosed.

## Description

### Technical Field

The present invention relates to communication device management technologies, and particularly to an automatic load reallocation method, device and system and storage medium.

### Background

A plurality of MSCs are presented in one mobile switching center pool (MSC Pool), each MSC is uniformly identified by a network resource identifier (NRI), the NRIs of all MSCs in the MSC Pool are consistent in length, and the NRIs are filled in a temporary mobile station identity (TMSI).

Due to various reasons, imbalance may occur to loads of the MSCs in the MSC Pool, and in addition, due to the requirements of operation and maintenance, it may be hoped in a certain condition to share the load of one MSC onto the rest MSCs in the MSC Pool. At this time, a method having minimum impact on a system and a user is required to be provided. The 3GPP23.236 protocol provides a method for load reallocation. Such load reallocation is manually initiated by a system operator in MSC network management, and the function of each MSC in the MSC Pool is selected by a radio access network node through a Non-Access Stratum Node Selection Function (NNSF) entity.

However, in actual application of MSC Pool networking, the user cannot select an MSC according to a load sharing proportion through an NNSF entity algorithm in some scenarios, but the user can independently select a certain MSC in the MSC Pool, so that the user compulsively resides on the MSC. In this way, imbalance of the load sharing proportion among all MSCs in the MSC Pool may be caused.

### Summary

In view of this, embodiments of the present invention are expected to provide an automatic load reallocation method, device and system and storage medium, which can automatically reallocate loads when a user is found to independently select a certain MSC, so as to guarantee the distribution balance of all MSCs in an MSC Pool of the user.

To achieve the above purpose, technical solutions in embodiments of the present invention are realized by that:

Embodiments of the present invention provide an automatic load reallocation method, including: allocating, when detecting that a user equipment UE moves from outside of a Mobile Switching Center MSC Pool to inside of the MSC Pool, an TMSI containing an NULL NRI, and a non-broadcast location area to the UE, and sending the TMSI containing the NULL NRI, and the non-broadcast location area to the UE.

In the above solution, the detecting that the UE moves from the outside of the MSC Pool to the inside of the MSC Pool includes:

determining that the UE moves from the outside of the MSC Pool to the inside of the MSC Pool is detected when an NRI in a received TMSI sent by the UE belongs to a current MSC and a Previous Location Area Identification (PLAI) does not belong to an MSC in the MSC Pool, or, a currently accessed Base Station Controller/Radio Network Controller (BSC/RNC) and a previously accessed BSC/RNC belong to the current MSC, and the currently accessed BSC/RNC is in the MSC Pool but the previously accessed BSC/RNC is not in the MSC Pool.

In the above solution, the method further includes: receiving a location update request of the UE sent by an NNSF entity.

In the above solution, when the UE roams from an MSC outside the MSC Pool to the inside of the MSC Pool and after the location update request of the UE sent by the NNSF entity is received, the method further includes:
sending the location update request of the UE to a Home Location Register (HLR);
receiving user data information sent by the HLR;
saving the user data information, and sending a user data response to the HLR; and
receiving a location update response sent by the HLR.

In the above solution, when the UE roams from the BSC/RNC outside the MSC Pool belonging to the current MSC to the BSC/RNC inside the MSC Pool and after the location update request sent by the NNSF entity is received, the method further includes:
judging whether a current user is an existing user, and when the current user is an existing user, determining whether a user identity carried in the location update request is the TMSI; and determining whether the BSC/RNC to which the user currently accesses and the BSC/RNC to which the user previously accesses is in the MSC Pool when it is determined that the UE uses the TMSI to conduct location update and the NRI in the TMSI belongs to the current MSC.

Embodiments of the present invention further provide an automatic load reallocation method, including:
allocating, when an MSC in an MSC Pool to which a UE applies for access detects that the UE moves from outside of the MSC Pool to inside of the MSC Pool, an TMSI containing an NULL NRI, and a non-broadcast location area to the UE, and sending the TMSI containing the NULL NRI, and the non-broadcast location area to the UE;
sending, by the UE, a location update request of the TMSI containing the NULL NRI to an NNSF entity when determining that the received non-broadcast location area is inconsistent with a located current location area; and
reselecting, by the NNSF entity, a new MSC for the UE according to load sharing proportion when determining that the NRI in the location update request message is the NULL NRI.

In the above solution, the detecting that the UE moves from the outside of the MSC Pool to the inside of the MSC Pool includes:
determining that the UE moves from the outside of the MSC Pool to the inside of the MSC Pool is detected when an NRI in an TMSI sent by the UE which is received by an MSC in the MSC Pool belongs to a current MSC and a previous PLAI does not belong to the MSC in the MSC Pool, or, a currently accessed BSC/RNC and a previously accessed BSC/RNC belong to the current MSC and the currently accessed BSC/RNC is in the MSC Pool but the previously accessed BSC/RNC is not in the MSC Pool.

In the above solution, before the determining that the UE moves from the outside of the MSC Pool to the inside of the MSC Pool is detected, the method further includes:
initiating, by the UE when the UE roams from an MSC outside the MSC Pool to the inside of the MSC Pool, a location update request to the NNSF entity using the TMSI allocated by the MSC outside the MSC Pool; and the NNSF entity acquires the NRI in the TMSI, determines an MSC in the MSC Pool corresponding to the NRI, and sends the location update request to the corresponding MSC; or,
initiating, by the UE when the UE roams from the BSC/RNC outside the MSC Pool belonging to the current MSC to the BSC/RNC inside the MSC Pool, a location update request to the NNSF entity using the TMSI; and the NNSF entity acquires the NRI in the TMSI, determines an MSC in the MSC Pool corresponding to the NRI, and sends the location update request to the corresponding MSC.

In the above solution, when the UE roams from an MSC outside the MSC Pool to the inside of the MSC Pool and after the NNSF entity sends the location update request to the corresponding MSC, the method further includes:
sending, by the MSC, the location update request of the UE to an HLR;
sending, by the HLR, user data information to the MSC;
saving, by the MSC, the user data information, and sends a user data response to the HLR; and
updating, by the HLR, information about the MSC where a user is located, and sends a location update response to the MSC.

In the above solution, when the UE roams from the BSC/RNC outside the MSC Pool belonging to the current MSC to the BSC/RNC inside the MSC Pool and after the NNSF entity sends the location update request to the corresponding MSC, the method further includes:
judging, by the MSC, whether a current user is an existing user, and determining, when the current user is an existing user, whether a user identity carried in the location update request is the TMSI; and determining, when it is determined that the UE uses the TMSI to conduct location update and the NRI in the TMSI belongs to the current MSC, whether the BSC/RNC to which the user currently accesses and the BSC/RNC to which the user previously accesses is in the MSC Pool.

Embodiments of the present invention further provide an automatic load reallocation device, including: a detection module, an allocation module and a sending module, wherein,
the detection module is configured to trigger the allocation module when detecting that a UE moves from the outside of an MSC Pool to the inside of the MSC Pool;
the allocation module is configured to allocate an TMSI containing an NULL NRI, and a non-broadcast location area to the UE; and
the sending module is configured to send the TMSI containing the NULL NRI, and the non-broadcast location area to the UE.

In the above solution, the detection module is configured to:
determine that the UE moves from the outside of the MSC Pool to the inside of the MSC Pool is detected when an NRI in a received TMSI sent by the UE belongs to a current MSC and a PLAI does not belong to an MSC in the MSC Pool, or, a currently accessed BSC/RNC and a previously accessed BSC/RNC belong to the current MSC and the currently accessed BSC/RNC is in the MSC Pool but the previously accessed BSC/RNC is not in the MSC Pool.

In the above solution, the device further includes a receiving module configured to receive a location update request of the UE sent by an NNSF entity.

In the above solution, when the UE roams from an MSC outside the MSC Pool to the inside of the MSC Pool and after the location update request of the UE sent by the NNSF entity is received,
the sending module is further configured to send the location update request of the UE to an HLR;
the receiving module is further configured to receive user data information sent by the HLR;
accordingly, the device further includes a storage module configured to save the user data information and trigger the sending module;
the sending module is further configured to send a user data response to the HLR; and
the receiving module is further configured to receive a location update response sent by the HLR.

In the above solution, when the UE roams from the BSC/RNC outside the MSC Pool belonging to the current MSC to the BSC/RNC inside the MSC Pool and after the location update request sent by the NNSF entity is received, the detection module is further configured to:

judge whether a current user is an existing user, and when the current user is an existing user, determine whether a user identity carried in the location update request is the TMSI; and determine whether the BSC/RNC to which the user currently accesses and the BSC/RNC to which the user previously accesses is in the MSC Pool when it is determined that the UE uses the TMSI to conduct location update and the NRI in the TMSI belongs to the current MSC.

Embodiments of the present invention further provide an automatic load reallocation system, including:
an MSC, an UE and an NNSF entity, wherein,
the MSC is configured to allocate, when detecting that the UE moves from outside of the MSC Pool to inside of the MSC Pool, an TMSI containing an NULL NRI, and a non-broadcast location area to the UE, and send the TMSI containing the NULL NRI, and the non-broadcast location area to the UE;
the UE is configured to send a location update request of the TMSI containing the NULL NRI to the NNSF entity when determining that the received non-broadcast location area is inconsistent with a located current location area; and
the NNSF entity is configured to reselect a new MSC for the UE according to load sharing proportion when determining that the NRI in a location update request message is the NULL NRI.

In the above solution, the MSC is configured to determine that the UE moves from the outside of the MSC Pool to the inside of the MSC Pool is detected when an NRI in an TMSI sent by the UE which is received by an MSC in the MSC Pool belongs to a current MSC and a previous PLAI does not belong to the MSC in the MSC Pool, or, a currently accessed BSC/RNC and a previously accessed BSC/RNC belong to the current MSC and the currently accessed BSC/RNC is in the MSC Pool but the previously accessed BSC/RNC is not in the MSC Pool.

In the above solution, before the MSC determines that the UE moves from the outside of the MSC Pool to the inside of the MSC Pool is detected,
the UE is further configured to initiate, when the UE roams from an MSC outside the MSC Pool to the inside of the Pool, a location update request to the NNSF entity using the TMSI allocated by the MSC outside the MSC Pool;
the UE is further configured to initiate, when the UE roams from the BSC/RNC outside the MSC Pool belonging to the current MSC to the BSC/RNC inside the MSC Pool, a location update request to the NNSF entity using the TMSI; and
the NNSF entity is further configured to acquire the NRI in the TMSI, determine an MSC in the MSC Pool corresponding to the NRI, and send the location update request to the corresponding MSC.

In the above solution, the system further includes an HLR; where when the UE roams from an MSC outside the MSC Pool to the inside of the MSC Pool and after the NNSF entity sends the location update request to the corresponding MSC,
the MSC is further configured to send the location update request of the UE to the HLR;
accordingly, the HLR is configured to send user data information to the MSC;
the MSC is further configured to save the user data information, and send a user data response to the HLR; and
accordingly, the HLR is further configured to update information about the MSC where a user is located, and send the location update response to the MSC.

In the above solution, when the UE roams from the BSC/RNC outside the MSC Pool belonging to the current MSC to the BSC/RNC inside the MSC Pool and after the NNSF entity sends the location update request to the corresponding MSC,
the MSC is further configured to judge whether a current user is an existing user, and determine, when the current user is an existing user, whether a user identity carried in the location update request is the TMSI; and determine, when it is determined that the UE uses the TMSI to conduct location update and the NRI in the TMSI belongs to the current MSC, whether the BSC/RNC to which the user currently accesses and the BSC/RNC to which the user previously accesses is in the MSC Pool.

Embodiments of the present invention further provide a computer storage medium storing a computer executable instruction for executing the automatic load reallocation method in embodiments of the present invention.

In the automatic load reallocation method, device and system, and storage medium which are provided in embodiments of the present invention, when an MSC determines that a UE moves from the outside of an MSC Pool to the inside of the MSC Pool, an TMSI containing an NULL NRI, and a non-broadcast location area are allocated to the UE, and the TMSI containing the NULL NRI, and the non-broadcast location area are sent to the UE; when the UE determines that the received non-broadcast location area is inconsistent with a located current location area, a location update request of the TMSI containing the NULL NRI is sent to an NNSF entity; and when the NNSF entity determines that the NRI in a location update request message is the NULL NRI, a new MSC is reselected according to load sharing proportion. In this way, when a user is found to independently select a certain MSC, a load reallocation can be automatically conducted on the user, and an MSC in an MSC Pool is selected by the NNSF entity according to proportion, so as to guarantee the distribution balance of all MSCs in the MSC Pool of the user.

### BRIEF DESCRIPTION OF DRAWINGS

Figure 1 is a schematic diagram illustrating a network topology involved in embodiments of the present invention;
Figure 2 is a flow diagram illustrating an automatic load reallocation method in embodiment 1 of the present invention;
Figure 3 is a flow diagram illustrating an automatic load reallocation method in embodiment 2 of the present invention;
Figure 4 is a flow diagram illustrating an automatic load reallocation method in embodiment 3 of the present invention;
Figure 5 is a flow diagram illustrating an automatic load reallocation method in embodiment 4 of the present invention;
Figure 6 is a flow diagram illustrating an automatic load reallocation method in embodiment 5 of the present invention;
Figure 7 is a schematic diagram illustrating a composition structure of an automatic load reallocation device in embodiments of the present invention; and
Figure 8 is a schematic diagram illustrating a composition structure of an automatic load reallocation system in embodiments of the present invention.

### Detailed Description

In the automatic load reallocation method in embodiments of the present invention, when an MSC determines that a UE moves from the outside of an MSC Pool to the inside of the MSC Pool, an TMSI containing an NULL NRI, and a non-broadcast location area are allocated to the UE, and the TMSI containing the NULL NRI, and the non-broadcast location area are sent to the UE; when the UE determines that the received non-broadcast location area is inconsistent with a located current location area, a location update request of the TMSI containing the NULL NRI is sent to an NNSF entity; and when the NNSF entity determines that the NRI in a location update request message is the NULL NRI, a new MSC is reselected according to load sharing proportion.

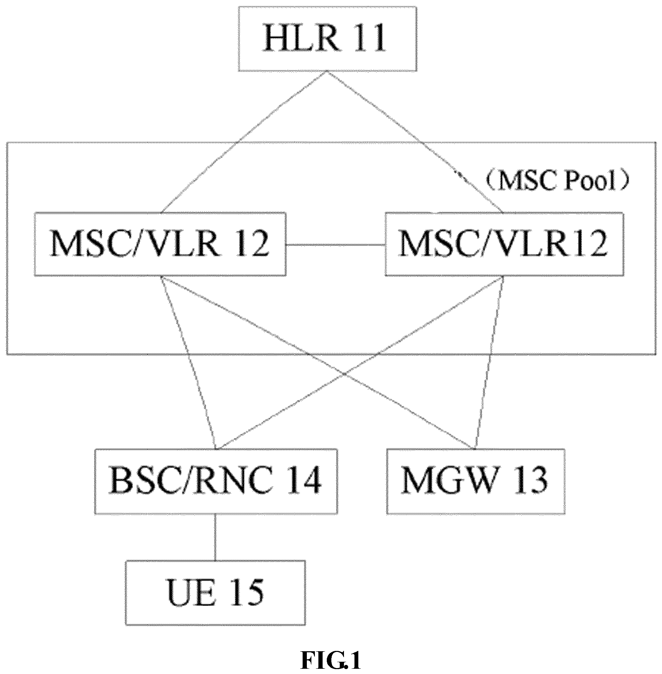

The network topology involved in embodiments of the present invention is as shown in Figure 1, including an HLR 11, an MSC and a visitor location register (VLR) 12, a media gateway (MGW) 13, an RNC and BSC 14 and a UE 15, wherein the HLR is used for saving subscription data of and location information about the user; the MSC cooperates with the VLR to complete call connection and control; the MGW provides bearer control and transmission resources; and the RNC and the BSC are 3G and 2G radio access control network elements respectively.

Two main types of scenarios causing sharing imbalance of user loads in an MSC Pool at present exist:

for one MSC Pool, BSC/RNC are all in the MSC Pool, i.e. all BSC/RNC belonging to the same MSC in the MSC Pool are all in the MSC Pool, when users outside the MSC Pool roam inside the MSC Pool, an NRI of a certain MSC (for example, an NRI of an MSC A) in the MSC Pool is just at a particular location in an TMSI allocated by an MSC outside the MSC Pool, and the NNSF entity directly sends these users roaming inside the MSC Pool onto the MSC A according to the NRI, thereby increasing users on the MSC A in number.

For one MSC Pool, one part of BSC/RNC is inside the MSC Pool, the other parts thereof are outside the MSC Pool. At present, in the evolution process from non-MSC Pool networking to MSC Pool networking, the BSC/RNC belonging to the same MSC in the MSC Pool may be divided into two parts, wherein one part of the BSC/RNC are inside the MSC Pool , and the part of BSC/RNC are outside the MSC Pool. When roaming from the BSC/RNC outside the MSC Pool of the same MSC to the BSC/RNC inside the MSC Pool, the users are defaulted to continuously reside on this MSC, thereby increasing users on this MSC in number.

In the automatic load reallocation method in embodiments of the present invention, when the NRI in the TMSI sent by the UE which is received by an MSC in the MSC Pool belongs to a current MSC and a previous location area identification (PLAI) does not belong to the MSC in the MSC Pool, or, a currently accessed BSC/RNC and a previously accessed BSC/RNC belong to the current MSC, and the currently accessed BSC/RNC is in the MSC Pool but the previously accessed BSC/RNC is not in the MSC Pool, an TMSI containing an NULL NRI, and a non-broadcast location area are allocated to the UE, and the TMSI containing the NULL NRI, and the non-broadcast location area are sent to the UE; when the UE determines that the received non-broadcast location area is inconsistent with a located current location area, a location update request of the TMSI containing the TMSI is sent to an NNSF entity; and when the NNSF entity determines that the NRI in a location update request message is the NULL NRI, a new mobile switching center (MSC) is reselected according to load sharing proportion.

In embodiments of the present invention, the non-broadcast location area does not correspond to an actual physical area, and is only used for triggering the UE to reinitiate a location update flow in the process of reallocating loads of MSCs in the MSC Pool.

Because the UE initiates a location update process only when determining that the received non-broadcast location area is inconsistent with a located current location area, in embodiments of the present invention, when it is determined that the allocated non-broadcast location area does not correspond to the actual physical area, for the UE, when moving from the outside of the MSC Pool to the inside of the MSC Pool, the non-broadcast location area received thereby which does not correspond to the actual physical area must be inconsistent with the located current location area. Therefore, when moving from the outside of the MSC Pool to the inside of the MSC Pool, the UE sends a location update request of the TMSI containing the NULL NRI to the NNSF entity, so that the NNSF reselects a new MSC according to load sharing proportion.

In embodiments of the present invention, the NNSF entity can exist as an independent device, and can be located in a network element in a network topology as well. For example, the NNSF entity can be integrated in a media gateway (MGW).

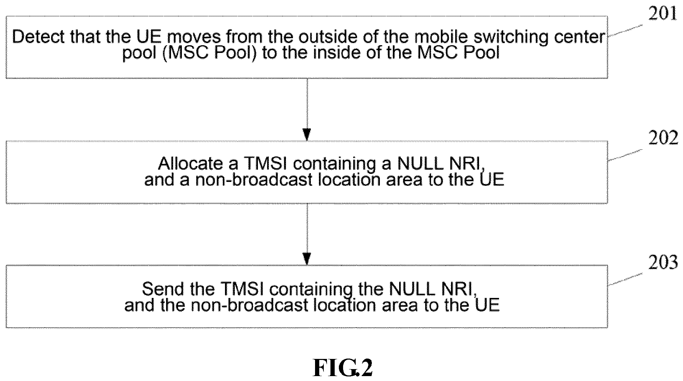

Implementation of technical solutions in embodiments of the present invention is described in detail below in combination with the drawings and the specific embodiments. Figure 2 is a flow diagram illustrating an automatic load reallocation method in embodiments of the present invention; as shown in Figure 2, the automatic load reallocation method in embodiments of the present invention includes the following steps:
in step 201: that a UE moves from the outside of an MSC Pool to the inside of the MSC Pool is detected;
   the step of detecting that the UE moves from the outside of the MSC Pool to the inside of the MSC Pool includes:
   determining that the UE moves from the outside of the MSC Pool to the inside of the MSC Pool is detected when the received NRI in the TMSI sent by the UE belongs to a current MSC and a PLAI does not belong to the MSC in the MSC Pool, or, a currently accessed BSC/RNC and a previously accessed BSC/RNC belong to the current MSC, and the currently accessed BSC/RNC is in the MSC Pool but the previously accessed BSC/RNC is not in the MSC Pool;
   in embodiments of the present invention, before the step of determining that the UE moves from the outside of the MSC Pool to the inside of the MSC Pool, the method further includes:
      receiving a location update request of the UE sent by an NNSF entity;
      sending the location update request of the UE to an HLR;
      receiving user data information sent by the HLR;
      saving the user data information, and sending a user data response to the HLR; and
      receiving a location update response sent by the HLR;
      or,
      receiving the location update request sent by the NNSF entity; and
      judging whether a current user is an existing user, and when the current user is an existing user, determining whether a user identity carried in the location update request is the TMSI; when it is determined that the UE uses the TMSI to conduct location update and the NRI in the TMSI belongs to the current MSC, determining whether the BSC/RNC to which the user currently accesses and the BSC/RNC to which the user previously accesses is in the MSC Pool;
in step 202: an TMSI containing an NULL NRI, and a non-broadcast location area are allocated to the UE; and
in step 203: the TMSI containing the NULL NRI, and the non-broadcast location area are sent to the UE.

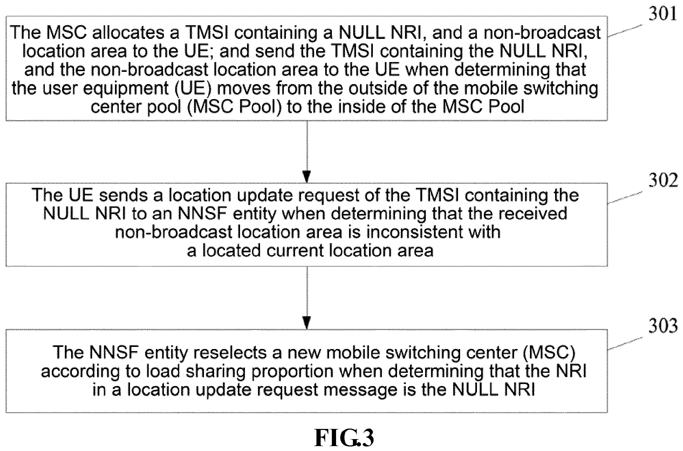

Figure 3 is a flow diagram illustrating an automatic load reallocation method in embodiment 2 of the present invention; as shown in Figure 3, the automatic load reallocation method in the embodiment 2 of the present invention includes the following steps:
in step 301: when detecting that the UE moves from the outside of the MSC Pool to the inside of the MSC Pool, an MSC in an MSC Pool to which the UE applies for access allocates an TMSI containing an NULL NRI, and a non-broadcast location area to the UE, and sends the TMSI containing the NULL NRI, and the non-broadcast location area to the UE;
in one embodiment, the step of detecting that the UE moves from the outside of the MSC Pool to the inside of the MSC Pool includes: determining that the UE moves from the outside of the MSC Pool to the inside of the MSC Pool is detected when the NRI in the TMSI sent by the UE which is received by an MSC in the MSC Pool belongs to a current MSC and a PLAI does not belong to the MSC in the MSC Pool, or, a currently accessed BSC/RNC and a previously accessed BSC/RNC belong to the current MSC, and the currently accessed BSC/RNC is in the MSC Pool but the previously accessed BSC/RNC is not in the MSC Pool.

In embodiments of the present invention, the MSC sends the TMSI containing the NULL NRI, and the non-broadcast location area to the UE through a location update acceptance message; and after receiving the location update acceptance message including the TMSI and the non-broadcast location area, the UE sends an TMSI reallocation completion message to the MSC.

In embodiments of the present invention, before the step of determining that the UE moves from the outside of the MSC Pool to the inside of the MSC Pool, the method further includes:
when roaming from an MSC outside the MSC Pool to the inside of the MSC Pool, the UE initiates a location update request to the NNSF entity using the TMSI allocated by the MSC outside the MSC Pool; the NNSF entity acquires the NRI in the TMSI, determines an MSC in the MSC Pool corresponding to the NRI, and sends the location update request to the corresponding MSC;
the MSC sends the location update request of the UE to an HLR;
the HLR sends user data information to the MSC;
the MSC saves the user data information, and sends a user data response to the HLR; and
the HLR updates information about the MSC where the user is located, and returns the location update response to the MSC;
or,
when roaming from the BSC/RNC outside the MSC Pool belonging to the current MSC to the BSC/RNC inside the MSC Pool, the UE initiates a location update request to the NNSF entity using the TMSI; and the NNSF entity acquires the NRI in the TMSI, determines an MSC in the MSC Pool corresponding to the NRI, and sends the location update request to the corresponding MSC;
the MSC judges whether a current user is an existing user, and when the current user is an existing user, determines whether a user identity carried in the location update request is the TMSI; and when it is determined that the UE uses the TMSI to conduct location update and the NRI in the TMSI belongs to the current MSC, determines whether the BSC/RNC to which the user currently accesses and the BSC/RNC to which the user previously accesses is in the MSC Pool.
step 302: the UE sends a location update request of the TMSI containing the NULL NRI to the NNSF entity when determining that the received non-broadcast location area is inconsistent with a located current location area; and
in step 303: the NNSF entity reselects a new MSC for the UE according to load sharing proportion when determining that the NRI in a location update request message is the NULL NRI,.

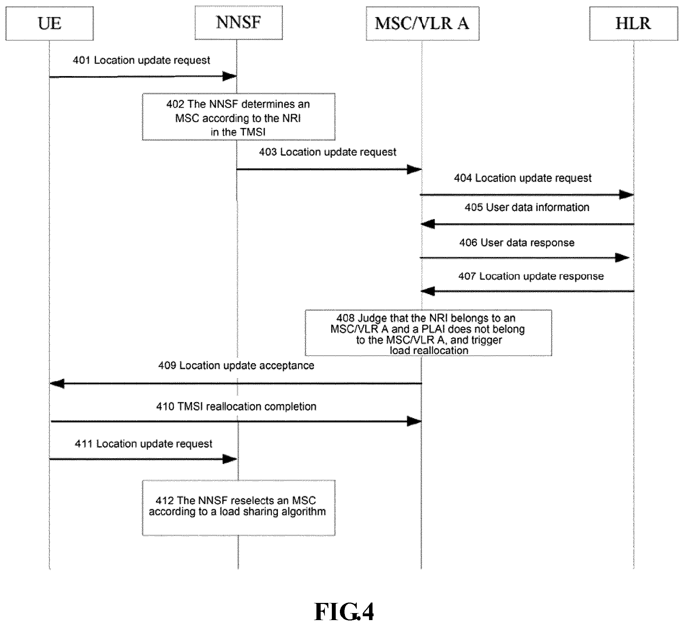

Figure 4 is a flow diagram illustrating an automatic load reallocation method in embodiment 3 of the present invention; this embodiment is applied to a scenario in which the BSC/RNC are all in the MSC Pool, when users outside the MSC Pool roam to the inside of the MSC Pool, as shown in Figure 4, the automatic load reallocation method in embodiments of the present invention includes the following steps:
in step 401: when roaming from the outside of the MSC Pool to the inside of the MSC Pool, the UE initiates a location update using the TMSI allocated by the MSC outside the MSC Pool, and sends the location update request to the NNSF entity;
in step 402: the NNSF entity acquires the NRI in the TMSI, and determines a designated MSC according to the NRI;
   for example, determines the designated MSC in the Pool as an MSC A according to the NRI in the TMSI; because the MSC cooperates with the VLR to complete call connection and control, in the subsequent description, the MSC and the VLR are integratedly described as a whole, i.e. an MSC/VLR; and accordingly, the MSC A corresponds to an MSC/VLR A;
in step 403: the NNSF entity sends the location update request to the MSC/VLR A;
in step 404: the MSC/VLR A sends a location update request to the HLR;
in step 405: the HLR sends user data information to the MSC/ VLR A;
in step 406: the MSC/VLR A saves the user data information, and sends a user data response to the HLR;
in step 407: the HLR updates information about the MSC/VLR where the user is located, and returns a location update response to the MSC/VLR;
in step 408: when determining that the NRI in the TMSI is an NRI of the MSC/VLR A and the PLAI does not belong to the MSC/VLR A, the MSC/VLR A initiates automatic reallocation of loads so as to allocate the TMSI containing the NULL NRI, and the non-broadcast location area;
in step 409: the MSC/VLR A sends a location update acceptance message to the UE, the message carrying the TMSI containing the NULL NRI, and the non-broadcast location area;
in step 410: the UE sends an TMSI reallocation completion message to the MSC/VLR A;
in step 411: the UE sends a location update request of the TMSI containing the NULL NRI to the NNSF entity when determining that the received non-broadcast location area is inconsistent with a located current location area;
in step 412: the NNSF entity reselects a new MSC according to load sharing proportion when determining that the NRI in a location update request message is the NULL NRI; and
in one embodiment, after determining the reselected MSC, the NNSF entity sends the location update request to the newly determined MSC.

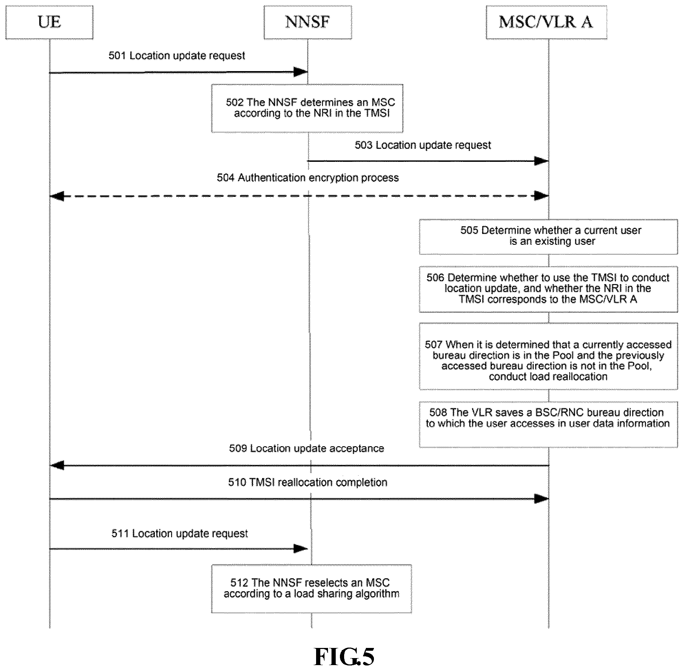

Figure 5 is a flow diagram illustrating an automatic load reallocation method in embodiment 4 of the present invention; embodiments of the present invention are applied to a scenario in which for BSC/RNC belonging to the same MSC in the MSC Pool, one part of the BSC/RNC are inside the MSC Pool, and the other part of the BSC/RNC are outside the MSC Pool, when the user roams from the BSC/RNC outside the MSC Pool belonging to the same MSC to the BSC/RNC inside the MSC Pool, as shown in Figure 5, the method for reallocating loads in the location update process in embodiments of the present invention includes the following steps:
in step 501: when roaming from the BSC/RNC outside the MSC Pool belonging to the same MSC to the BSC/RNC inside the MSC Pool, the UE initiates a location update using the existing TMSI, and sends a location update request to the NNSF entity;
in step 502: the NNSF entity acquires the NRI in the TMSI, and determines a designated MSC according to the NRI;
for example, determines the designated MSC in the Pool as an MSC/VLR A according to the NRI in the TMSI;
in step 503: the NNSF entity sends the location update request to the MSC/VLR A;
in step 504: the MSC/VLR A conducts an authentication and encryption process together with the UE;
the step may be selectively executed according to actual demands and may not be executed as well;
in step 505: the MSC/VLR A determines whether a current user is an existing user;
when the user is a newly created user, the situation where the UE roams from the BSC/RNC outside the MSC Pool belonging to the same MSC to the BSC/RNC inside the MSC Pool may not occur, directly go to step 508; and when the current user is an existing user, execute step 506;
in step 506: the MSC/VLR A determines whether the user identity carried in the location update request is the TMSI and whether the NRI in the TMSI corresponds to the MSC/VLR A;
when the UE uses the international mobile subscriber identification number (IMSI) to conduct location update, it indicates that the NNSF entity already selects the MSC/VLR according to load sharing proportion, load allocation is not conducted in this flow, and directly go to step 508; and when the UE uses the TMSI to conduct location update and the NRI in the TMSI belongs to this MSC/VLR A, go to step 507;
in step 507: when the MSC/VLR A determines that the currently accessed BSC/RNC is in the MSC Pool and the previously accessed BSC/RNC is not in the MSC Pool, the MSC/VLR A automatically initiates load reallocation so as to allocate the TMSI containing the NULL NRI, and the non-broadcast location area;
in step 508: the MSC/VLR A saves a BSC/RNC bureau direction to which the user accesses in user record information;
in step 509: the MSC/VLR A sends a location update acceptance message to the UE, the message carrying the TMSI containing the NULL NRI, and the non-broadcast location area;
in step 510: the UE sends an TMSI reallocation completion message to the MSC/VLR A;
in step 511: the UE sends a location update request of the TMSI containing the NULL NRI to the NNSF entity when determining that the received non-broadcast location area is inconsistent with a located current location area;
in step 512: the NNSF entity reselects a new MSC according to load sharing proportion when determining that the NRI in a location update request message is the NULL NRI; and
in one embodiment, after determining the reselected MSC, the NNSF entity sends the location update request to the newly determined MSC.

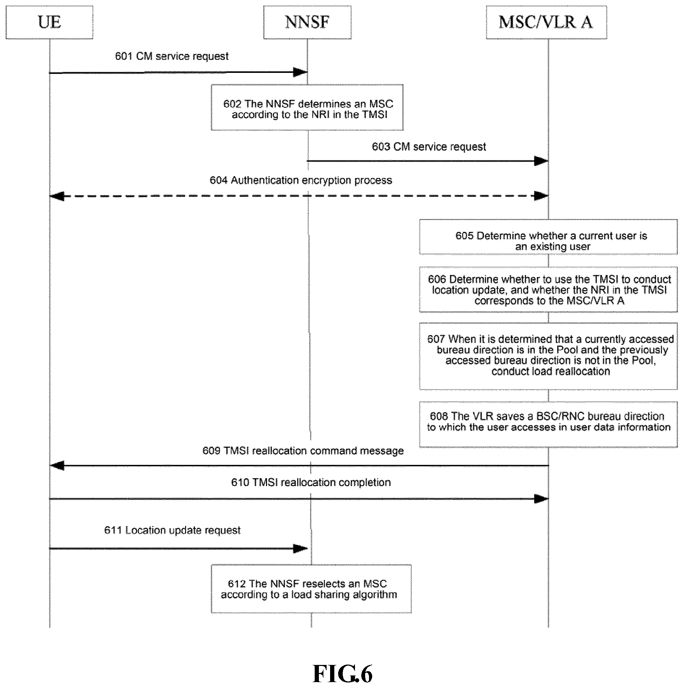

Figure 6 is a flow diagram illustrating an automatic load reallocation method in embodiment 5 of the present invention; embodiments of the present invention are applied to a scenario in which for BSC/RNC belonging to the same MSC in one MSC Pool, one part of the BSC/RNC are inside the MSC Pool, and the other part of the BSC/RNC are outside the MSC Pool, when the user roams from the BSC/RNC outside the MSC Pool belonging to the same MSC to the BSC/RNC inside the MSC Pool, as shown in Figure 6, the method for reallocating loads in the location update process in embodiments of the present invention includes the following steps:
in step 601: when roaming from the BSC/RNC outside the MSC Pool belonging to the same MSC to the BSC/RNC inside the MSC Pool, the UE initiates a CM service request to the NNSF entity using the existing TMSI;
step 602 is identical to step 502;
in step 603: the NNSF entity sends the CM service request to the MSC/VLR A;
step 604 to step 608 are identical to step 504 to step 508;
in step 609: the MSC/VLR A sends an TMSI reallocation command message to the UE, the message carrying the TMSI containing the NULL NRI, and the non-broadcast location area; and
steps 610 to step 612 are identical to step 510 to step 512.

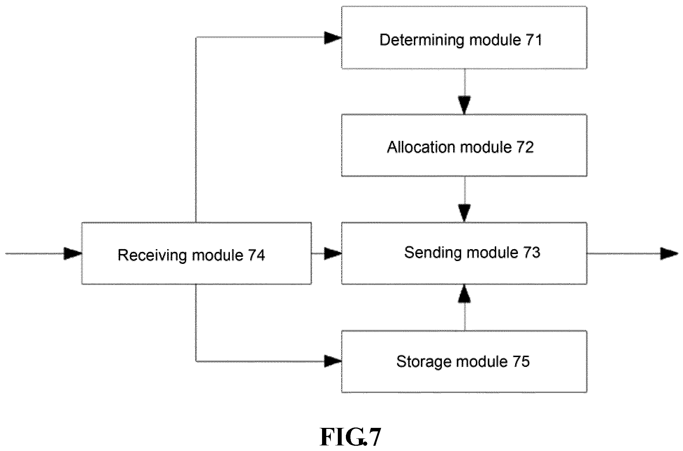

Embodiments of the present invention further provide an automatic load reallocation device. The device is located in an MSC. Figure 7 is a schematic diagram illustrating a structure of the automatic load reallocation device in embodiments of the present invention; an shown in Figure 7, the device includes a detection module 71, an allocation module 72 and a sending module 73, wherein
the detection module 71 is configured to trigger the allocation module when detecting that a UE moves from the outside of an MSC Pool to the inside of the MSC Pool; and
in one embodiment, the detection module 71 is configured to determine that the UE moves from the outside of the MSC Pool to the inside of the Pool when the NRI in the TMSI sent by the UE which is received by an MSC in the MSC Pool belongs to a current MSC and a PLAI does not belong to the MSC in the MSC Pool, or, a currently accessed BSC/RNC and a previously accessed BSC/RNC belong to the current MSC, and the currently accessed BSC/RNC is in the MSC Pool but the previously accessed BSC/RNC is not in the MSC Pool.
the allocation module 72 is configured to allocate an TMSI containing an NULL NRI, and a non-broadcast location area to the UE;
the sending module 73 is configured to send the TMSI containing the NULL NRI, and the non-broadcast location area to the UE;
in embodiments of the present invention, the device further includes a receiving module 74 configured to receive a location update request of the UE sent by an NNSF entity;
the sending module 73 is further configured to send the location update request of the UE to an HLR when the UE roams from an MSC outside the MSC Pool to the inside of the MSC Pool after the location update request of the UE sent by the NNSF entity is received;
the receiving module 74 is further configured to receive user data information sent by the HLR;
the device further includes a storage module 75 configured to save the user data information and trigger the sending module 73 to send a user data response to the HLR; and
the receiving module 74 is further configured to receive a location update response sent by the HLR.

In embodiments of the present invention, the detection module 71 is further configured to judge whether a current user is an existing user, and when the current user is an existing user, determine whether a user identity carried in the location update request is the TMSI; and when it is determined that the UE uses the TMSI to conduct location update and the NRI in the TMSI belongs to the current MSC, determine whether the BSC/RNC to which the user currently accesses and the BSC/RNC to which the user previously accesses is in the MSC Pool when the UE roams from the BSC/RNC outside the MSC Pool belonging to the current MSC to the BSC/RNC inside the MSC Pool after the receiving module 74 receives the location update request sent by the NNSF entity.

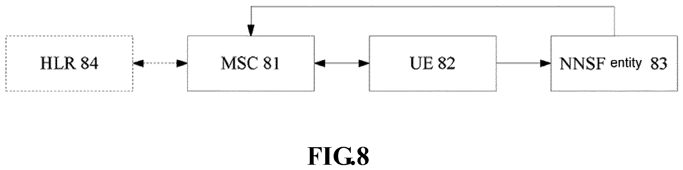

Embodiments of the present invention further provide an automatic load reallocation system. Figure 8 is a schematic diagram illustrating a structure of an automatic load reallocation system in embodiments of the present invention; an shown in Figure 8, the system includes an MSC 81, a UE 82 and an NNSF entity 83, wherein,
the MSC 81 is configured to allocate an TMSI containing an NULL NRI, and a non-broadcast location area to the UE 82, and send the TMSI containing the NULL NRI, and the non-broadcast location area to the UE 82 when determining that the UE 82 moves from the outside of the MSC Pool to the inside of the MSC Pool which are belong to the MSC 81;

In embodiments of the present invention, the MSC 81 is configured to determine that the UE 82 moves from the outside of the MSC Pool to the inside of the MSC Pool which are belong to the MSC 81 when the received NRI in the TMSI sent by the UE 82 belongs to a current MSC 81 and a PLAI does not belong to the MSC 81 in the MSC Pool belonging to the MSC 81, or, a currently accessed BSC/RNC and a previously accessed BSC/RNC belong to the current MSC 81, and the currently accessed BSC/RNC is in the MSC Pool belonging to the MSC 81 but the previously accessed BSC/RNC is not in the MSC Pool belonging to the MSC 81. The MSC 81 is further configured to send the TMSI containing the NULL NRI, and the non-broadcast location area to the UE 82 through a location update acceptance message.
the UE 82 is configured to send a location update request of the TMSI containing the NULL NRI to the NNSF entity 83 when determining that the received non-broadcast location area is inconsistent with a located current location area; and
in one embodiment, the UE 82 is further configured to send an TMSI reallocation completion message to the MSC 81 after receiving the location update acceptance message including the TMSI and the non-broadcast location area.

The NNSF entity 83 is configured to reselect a new MSC 81 according to load sharing proportion when determining that the NRI in a location update request message is the NULL NRI.

Before the MSC 81 determines that the UE 82 moves from the outside of the MSC Pool to the inside of the MSC Pool which are belong to the MSC 81,
when the UE 82 roams from an MSC 81 outside the MSC Pool to the inside of the MSC Pool, the UE 82 is further configured to initiate a location update request to the NNSF entity 83 using the TMSI allocated by the MSC 81 outside the MSC Pool;
when the UE 82 roams from the BSC/RNC outside the MSC Pool belonging to the current MSC 81 to the BSC/RNC inside the MSC Pool, the UE 82 is further configured to initiate a location update request to the NNSF entity 83 using the TMSI; and
the NNSF entity 83 is further configured to acquire the NRI in the TMSI, determine an MSC 81 in the MSC Pool, which belongs to the MSC 81, corresponding to the NRI, and send the location update request to the corresponding MSC 81.

In embodiments of the present invention, the system further includes an HLR 84; when the UE 82 roams from an MSC 81 outside the MSC Pool to the inside of the MSC Pool, after the NNSF entity 83 sends the location update request to the corresponding MSC 81,
the MSC 81 is further configured to send the location update request of the UE to the HLR 84;
accordingly, the HLR 84 is configured to send user data information to the MSC 81;
the MSC 81 is further configured to save the user data information, and send a user data response to the HLR 84; and
accordingly, the HLR 84 is further configured to update information about the MSC 81 where a user is located, and send the location update response to the MSC 81.

In embodiments of the present invention, when the UE 82 roams from the BSC/RNC outside the MSC Pool belonging to the current MSC 81 to the BSC/RNC inside the MSC Pool, after the NNSF entity 83 sends the location update request to the corresponding MSC 81,
the MSC 81 is further configured to judge whether a current user is an existing user, and when the current user is an existing user, determine whether a user identity carried in the location update request is the TMSI; and when it is determined that the UE 82 uses the TMSI to conduct location update and the NRI in the TMSI belongs to the current MSC 81, determine whether the BSC/RNC to which the user currently accesses and the BSC/RNC to which the user previously accesses is in the MSC Pool.

Each processing module in the automatic load reallocation device proposed in embodiments of the present invention may be realized by a processor, and of cause, may be realized by a specific logic circuit as well, wherein the processor may be a processor on a mobile terminal or a server, and in actual application, the processor may be a central processing unit (CPU), a micro-processor unit (MPU), a digital signal processor (DSP) or a field programmable gate array (FPGA), etc.

In embodiments of the present invention, when the above automatic load reallocation method is realized in a form of a software function module and is sold or used as an independent product, the above method can also be stored in a computer readable storage medium. Based on such understanding, technical solutions in embodiments of the present invention can be reflected in a form of a software product in essence or in a part of making a contribution to the existing art. The computer software product is stored in a storage medium, including several instructions to enable one computer device (may be a personal computer, a server or a network device, etc.) to execute all or some of the methods of various embodiments of the present invention. However, the foregoing storage medium includes: various media such as a USB flash disk, a mobile hard disk, a read only memory (ROM), a magnetic disc or a compact disc, etc. which can store program coeds. In this way, embodiments of the present invention are not limited to any specific hardware and software combination.

Accordingly, embodiments of the present invention further provide a computer storage medium, wherein a computer program is stored in the computer storage medium and the computer program is used for executing the automatic load reallocation method in embodiments of the present invention.

The above only describes preferred embodiments of the present invention and is not intended to limit a protection scope of the present invention.

## Claims

1. An automatic load reallocation method, comprising: allocating, when detecting that a user equipment UE moves from outside of a Mobile Switching Center MSC Pool to inside of the MSC Pool, a Temporary Mobile Station Identity TMSI containing an NULL Network Resource Identifier NRI, and a non-broadcast location area to the UE, and sending the TMSI containing the NULL NRI, and the non-broadcast location area to the UE.

2. The method according to claim 1, wherein the detecting that the UE moves from the outside of the MSC Pool to the inside of the MSC Pool includes:
determining that the UE moves from the outside of the MSC Pool to the inside of the MSC Pool is detected when an NRI in a received TMSI sent by the UE belongs to a current MSC and a Previous Location Area Identification PLAI does not belong to an MSC in the MSC Pool, or, a currently accessed Base Station Controller BSC /Radio Network Controller RNC and a previously accessed BSC/RNC belong to the current MSC, and the currently accessed BSC/RNC is in the MSC Pool but the previously accessed BSC/RNC is not in the MSC Pool.

3. The method according to claim 2, further comprising: receiving a location update request of the UE sent by a Non-Access Stratum Node Selection Function NNSF entity.

4. The method according to claim 3, when the UE roams from an MSC outside the MSC Pool to the inside of the MSC Pool and after the location update request of the UE sent by the NNSF entity is received, further comprising:
sending the location update request of the UE to a Home Location Register HLR;
receiving user data information sent by the HLR;
saving the user data information, an sending a user data response to the HLR;
receiving a location update response sent by the HLR.

5. The method according to claim 3, when the UE roams from the BSC/RNC outside the MSC Pool belonging to the current MSC to the BSC/RNC inside the MSC Pool and after the location update request sent by the NNSF entity is received, further comprising:
judging whether a current user is an existing user, and when the current user is an existing user, determining whether a user identity carried in the location update request is the TMSI; and determining whether the BSC/RNC to which the user currently accesses and the BSC/RNC to which the user previously accesses is in the MSC Pool when it is determined that the UE uses the TMSI to conduct location update and the NRI in the TMSI belongs to the current MSC.

6. An automatic load reallocation method, comprising:
allocating, when an MSC in an MSC Pool to which a UE applies for access detects that the UE moves from outside of the MSC Pool to inside of the MSC Pool, an TMSI containing an NULL NRI, and a non-broadcast location area to the UE, and sending the TMSI containing the NULL NRI, and the non-broadcast location area to the UE;
sending, by the UE, a location update request of the TMSI containing the NULL NRI to an NNSF entity when determining that the received non-broadcast location area is inconsistent with a located current location area; and
reselecting, by the NNSF entity, a new MSC for the UE according to load sharing proportion when determining that the NRI in the location update request message is the NULL NRI.

7. The method according to claim 6, wherein the detecting that the UE moves from the outside of the MSC Pool to the inside of the MSC Pool comprises:
determining that the UE moves from the outside of the MSC Pool to the inside of the MSC Pool is detected when an NRI in an TMSI sent by the UE which is received by an MSC in the MSC Pool belongs to a current MSC and a previous PLAI does not belong to the MSC in the MSC Pool, or, a currently accessed BSC/RNC and a previously accessed BSC/RNC belong to the current MSC, and the currently accessed BSC/RNC is in the MSC Pool but the previously accessed BSC/RNC is not in the MSC Pool.

8. The method according to claim 7, before the determining that the UE moves from the outside of the MSC Pool to the inside of the MSC Pool is detected, further comprising:
initiating, by the UE when the UE roams from an MSC outside the MSC Pool to the inside of the MSC Pool, a location update request to the NNSF entity using the TMSI allocated by the MSC outside the MSC Pool; acquiring, by the NNSF entity, the NRI in the TMSI, determining an MSC in the MSC Pool corresponding to the NRI, and sending the location update request to the corresponding MSC; or,
initiating, by the UE when the UE roams from the BSC/RNC outside the MSC Pool belonging to the current MSC to the BSC/RNC inside the MSC Pool, a location update request to the NNSF entity using the TMSI; and acquiring, by the NNSF entity, the NRI in the TMSI, determining an MSC in the MSC Pool corresponding to the NRI, and sending the location update request to the corresponding MSC.

9. The method according to claim 8, when the UE roams from an MSC outside the MSC Pool to the inside of the MSC Pool and after the NNSF entity sends the location update request to the corresponding MSC, further comprising:
sending, by the MSC, the location update request of the UE to an HLR;
sending, by the HLR, user data information to the MSC;
saving, by the MSC, the user data information, and sending a user data response to the HLR; and
updating, by the HLR, information about the MSC where the user is located, and sending the location update response to the MSC.

10. The method according to claim 8, when the UE roams from the BSC/RNC outside the MSC Pool belonging to the current MSC to the BSC/RNC inside the MSC Pool and after the NNSF entity sends the location update request to the corresponding MSC, further comprising:
Judging, by the MSC, whether a current user is an existing user, and determining, when the current user is an existing user, whether a user identity carried in the location update request is the TMSI; and determining, when it is determined that the UE uses the TMSI to conduct location update and the NRI in the TMSI belongs to the current MSC, whether the BSC/RNC to which the user currently accesses and the BSC/RNC to which the user previously accesses is in the MSC Pool.

11. An automatic load reallocation device, comprising: a detection module, an allocation module and a sending module, wherein
the detection module is configured to trigger the allocation module when detecting that a UE moves from outside of an MSC Pool to inside of the MSC Pool;
the allocation module is configured to allocate an TMSI containing an NULL NRI, and a non-broadcast location area to the UE; and
the sending module is configured to send the TMSI containing the NULL NRI, and the non-broadcast location area to the UE.

12. The device according to claim 11, wherein the detection module is configured to:
determine that the UE moves from the outside of the MSC Pool to the inside of the MSC Pool is detected when an NRI in a received TMSI sent by the UE belongs to a current MSC and a PLAI does not belong to an MSC in the MSC Pool, or, a currently accessed BSC/RNC and a previously accessed BSC/RNC belong to the current MSC, and the currently accessed BSC/RNC is in the MSC Pool but the previously accessed BSC/RNC is not in the MSC Pool.

13. The device according to claim 12, further comprising a receiving module configured to receive a location update request of the UE sent by an NNSF entity.

14. The device according to claim 13, wherein when the UE roams from an MSC outside the MSC Pool to the inside of the MSC Pool and after the location update request of the UE sent by the NNSF entity is received,
the sending module is further configured to send the location update request of the UE to an HLR;
the receiving module is further configured to receive user data information sent by the HLR;
accordingly, the device further comprises a storage module configured to save the user data information and trigger the sending module;
the sending module is further configured to send a user data response to the HLR; and
the receiving module is further configured to receive a location update response sent by the HLR.

15. The device according to claim 13, wherein when the UE roams from the BSC/RNC outside the MSC Pool belonging to the current MSC to the BSC/RNC inside the MSC Pool and after the location update request sent by the NNSF entity is received, the detection module is further configured to:
judge whether a current user is an existing user, and when the current user is an existing user, determine whether a user identity carried in the location update request is the TMSI; and determine whether the BSC/RNC to which the user currently accesses and the BSC/RNC to which the user previously accesses is in the MSC Pool when it is determined that the UE uses the TMSI to conduct location update and the NRI in the TMSI belongs to the current MSC.

16. An automatic load reallocation system, comprising: an MSC, an UE and an NNSF entity, wherein
the MSC is configured to allocate, when detecting that the UE moves from outside of the MSC Pool to inside of the MSC Pool, an TMSI containing an NULL NRI, and a non-broadcast location area to the UE, and send the TMSI containing the NULL NRI, and the non-broadcast location area to the UE;
the UE is configured to send a location update request of the TMSI containing the NULL NRI to the NNSF entity when determining that the received non-broadcast location area is inconsistent with a located current location area; and
the NNSF entity is configured to reselect a new MSC for the UE according to load sharing proportion when determining that the NRI in a location update request message is the NULL NRI.

17. The system according to claim 16, wherein the MSC is configured to determine that the UE moves from the outside of the MSC Pool to the inside of the MSC Pool is detected when an NRI in an TMSI sent by the UE which is received by an MSC in the MSC Pool belongs to a current MSC and a previous PLAI does not belong to the MSC in the MSC Pool, or, a currently accessed BSC/RNC and a previously accessed BSC/RNC belong to the current MSC, and the currently accessed BSC/RNC is in the MSC Pool but the previously accessed BSC/RNC is not in the MSC Pool.

18. The system according to claim 17, wherein before the MSC determines that the UE moves from the outside of the MSC Pool to the inside of the MSC Pool is detected,
the UE is further configured to initiate, when the UE roams from an MSC outside the MSC Pool to the inside of the Pool, a location update request to the NNSF entity using the TMSI allocated by the MSC outside the MSC Pool;
the UE is further configured to initiate, when the UE roams from the BSC/RNC outside the MSC Pool belonging to the current MSC to the BSC/RNC inside the MSC Pool, a location update request to the NNSF entity using the TMSI; and
the NNSF entity is further configure to acquire the NRI in the TMSI, determine an MSC in the MSC Pool corresponding to the NRI, and send the location update request to the corresponding MSC.

19. The system according to claim 18, further comprising an HLR; wherein when the UE roams from an MSC outside the MSC Pool to the inside of the MSC Pool and after the NNSF entity sends the location update request to the corresponding MSC,
the MSC is further configured to send the location update request of the UE to the HLR;
accordingly, the HLR is configured to send user data information to the MSC; the MSC is further configured to save the user data information, and send a user data response to the HLR; and
accordingly, the HLR is further configured to update information about the MSC where the user is located, and send the location update response to the MSC.

20. The system according to claim 18, wherein when the UE roams from the BSC/RNC outside the MSC Pool belonging to the current MSC to the BSC/RNC inside the MSC Pool and after the NNSF entity sends the location update request to the corresponding MSC,
the MSC is further configured to: judge whether a current user is an existing user, and determine, when the current user is an existing user, whether a user identity carried in the location update request is the TMSI; and determine, when it is determined that the UE uses the TMSI to conduct location update and the NRI in the TMSI belongs to the current MSC, whether the BSC/RNC to which the user currently accesses and the BSC/RNC to which the user previously accesses is in the MSC Pool.

21. A computer storage medium storing a computer executable instruction for executing the automatic load reallocation method of any of claims 1 to 5.

22. A computer storage medium storing a computer executable instruction for executing the automatic load reallocation method of any of claims 6 to 10.
